# EUROPÄISCHE PATENTANMELDUNG

(11) **EP 4 036 141 A1**
(43) Veröffentlichungstag der Anmeldung: **03.08.2022**
(21) Anmeldenummer: 21153823.6
(22) Anmeldetag: 27.01.2021
(51) Int. Cl.: C08G 59/18, C09D 163/00, C09J 163/00

(54) **ADDUKT VON ALKYLIERTEM DIAMIN UND NOVOLAK-EPOXIDHARZ**

(71) Anmelder: SIKA TECHNOLOGY AG, 6340 Baar (CH)
(72) Erfinder: KASEMI, Edis, 8046 Zürich (CH); KRAMER, Andreas, 8008 Zürich (CH); STADELMANN, Ursula, 8046 Zürich (CH); BURCKHARDT, Urs, 8049 Zürich (CH)
(74) Vertreter: Sika Patent Attorneys

(57) **Zusammenfassung**

Gegenstand der Erfindung ist ein aminfunktionelles Addukt aus der Umsetzung von mindestens einem Amin der Formel (I) mit mindestens einem Novolak-Epoxidharz mit einer mittleren Funktionalität im Bereich von 2.5 bis 4.

Das Addukt ist ohne Verdünner und ohne hohen Amin-Überschuss bei Raumtemperatur flüssig. Es ist geeignet als Härter für Epoxidharz-Zusammensetzungen, wo es eine gute Verarbeitbarkeit, schnelle Aushärtung und eine hohe Hydrophobie und Vernetzungsdichte ermöglicht. Besonders geeignet ist es für Beschichtungen, wo es schöne Oberflächen, eine gute Zwischenhaftung, eine hohe Wärmeschockbeständigkeit und einen guten Schutz gegen Stahlkorrosion ermöglicht.

## Beschreibung

### Technisches Gebiet

Die Erfindung betrifft aminfunktionelle Addukte von monoalkylierten Diaminen und Novolak-Epoxidharzen und deren Verwendung als Härter für Epoxidharz-Zusammensetzungen, welche besonders geeignet sind als Korrosionsschutz-Beschichtung.

### Stand der Technik

Beschichtungen oder Anstriche auf Epoxidharz-Basis für den Korrosionsschutz von Bauteilen aus Stahl sind in der Industrie und im Bauwesen weit verbreitet. Sie bestehen aus flüssigen Harz- und Härter-Komponenten, welche vor der Applikation gemischt werden und bei Umgebungstemperaturen im Bereich von etwa 5 bis 40 °C zur festen Beschichtung aushärten. Die Beschichtungen sollen eine niedrige Viskosität aufweisen, schnell und störungsfrei aushärten und dabei eine ebenmässige, klebfreie Oberfläche ohne Trübungen, Flecken oder Beläge ausbilden, auch bei feuchtkalten Bedingungen. Zudem sollen sie bei einem mehrschichtigen Auftrag über eine gute Zwischenhaftung verfügen, was beim Auftreten von Oberflächenstörungen durch Blushing-Effekte oft nicht gegeben ist, und besonders robust gegenüber korrosiven Bedingungen sein, insbesondere Feuchtigkeit in Kombination mit Hitze und/oder Salzen. Für optisch anspruchsvolle Anwendungen sollen die Beschichtungen ausserdem eine möglichst geringe Neigung zum Vergilben unter Lichteinfluss aufweisen.

Novolak-Epoxidharze sind besonders hydrophob und ermöglichen eine hohe Vernetzungsdichte. Sie sind deshalb besonders geeignet für die Verwendung in Korrosionsschutz-Beschichtungen. In der Härter-Komponente können sie in Form von Addukten mit Polyaminen eingesetzt werden. Die aus dem Stand der Technik bekannten aminfunktionellen Addukte von Novolak-Epoxidharzen sind aber sehr hochviskos und müssen für eine Verarbeitung bei Umgebungstemperaturen meist stark verdünnt werden, typischerweise mit Verdünnern wie Xylol oder Benzylalkohol und/oder hohen Mengen an überschüssigem Polyamin bei der Adduktierung.

Da Verdünner bei der Aushärtung nicht in die Harzmatrix eingebaut werden, können sie durch Verdampfungs- oder Diffusionsprozesse in die Umgebung freigesetzt werden. Heutzutage werden aber zunehmend emissionsarme Produkte gewünscht, die nach der Aushärtung einen geringen Gehalt an freisetzbaren Substanzen aufweisen. Verdünner wie Xylol oder Benzylalkohol sollen deshalb nur in geringer Menge oder gar nicht verwendet werden. Und hohe Mengen an überschüssigem Polyamin bei der Adduktierung führen verstärkt zu Blushing und bewirken eine verminderte Konzentration an Novolak im Härter, wodurch der Effekt durch den hydrophoben Baustein geschmälert wird.
US 4,348,505 offenbart Addukte von Polyalkylenaminen wie Diethylentriamin (DETA) oder primären Diaminen wie 1,2-Diaminocyclohexan mit Novolak-Epoxidharzen. Die hergestellten Addukte enthaltend erhebliche Mengen an Xylol und/oder Benzylalkohol.
US 2019/0382524 offenbart Addukte von Bis(6-aminohexyl)amin oder Triethylentetramin (TETA) mit Novolak-Epoxidharzen, die mit einem hohen Amin-Überschuss hergestellt sind.
EP 2,151,461 offenbart eine Mischung aus benzyliertem DETA und TETA und in Beispiel 21 ein Addukt davon mit einem Novolak-Epoxidharz mit hohem Gehalt an Xylol.
WO 2017/046293 offenbart Addukte von N-Benzyl-1,2-propandiamin oder N-Benzyl-1,2-ethandiamin mit Diepoxiden wie insbesondere Bisphenol A-Diglycidylether. Solche Addukte sind deutlich weniger hochfunktionell und hydrophob im Vergleich zu Addukten von Novolak-Epoxidharzen.

### Darstellung der Erfindung

Aufgabe der vorliegenden Erfindung ist es daher, ein aminfunktionelles Addukt zur Verfügung zu stellen, welches auch ohne Verdünner wie Xylol oder Benzylalkohol und ohne hohen Amin-Überschuss bei Raumtemperatur flüssig und gut handhabbar ist, eine besonders hohe Vernetzungsdichte ermöglicht und somit besonders geeignet ist für die Verwendung in Korrosionsschutz-Beschichtungen.

Überraschenderweise löst das aminfunktionelle Addukt aus der Umsetzung von mindestens einem Amin der Formel (I) mit mindestens einem Novolak-Epoxidharz gemäss Anspruch 1 diese Aufgabe. Das erfindungsgemässe Addukt ist trotz der hohen Funktionalität des Novolak-Epoxidharzes überraschend niedrigviskos. Es ist besonders geruchsarm und ohne hohen Amin-Überschuss und ohne Verdünner bei Raumtemperatur flüssig handhabbar. Dadurch ermöglicht es geruchsarme, emissionsarme Epoxidharz-Produkte mit hohem Gehalt an Novolak-Epoxidharz im Härter, wobei je nach Anwendung und Bedarf weitere Amine und/oder ein Verdünner bei der späteren Verwendung flexibel zugefügt werden können. Das erfindungsgemässe Addukt ermöglicht Epoxidharz-Beschichtungen, welche bei Umgebungstemperaturen gut verarbeitbar sind, überraschend schnell aushärten und dabei eine ebenmässige, fehlerfreie Oberfläche mit gernger Neigung zum Vergilben ausbilden. Solche Beschichtungen sind ästhetisch hochwertig, besonders robust gegenüber Feuchtigkeit, auch in Kombination mit Hitze und/oder Salzen, und verfügen bei mehrschichtigem Aufbau über eine besonders gute Haftung zwischen den Schichten (Zwischenhaftung). Weiterhin verfügen solche Beschichtungen über eine hohe Wärmeschockbeständigkeit, wobei sie in dünner Schicht von beispielsweise 250 µm auf Stahl mehrfache schockartige Temperaturwechsel zwischen Eiswasser und 200 °C ohne Rissbildung überstehen, was aufgrund der hohen Funktionalität des dem Addukt zugrunde liegenden Novolak-Epoxidharzes besonders überraschend ist.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein aminfunktionelles Addukt aus der Umsetzung von
- mindestens einem Amin der Formel (I),

   Z-NH-A-NH-CH₂-Y (I)

   wobei
   A für einen zweiwertigen Alkylen-, Cycloalkylen- oder Arylalkylen-Rest mit 2 bis 15 C-Atomen steht,
   Z für H oder ---CH₂-Y steht, und
   Y für H oder einen Alkyl-, Cycloalkyl, Aralkyl- oder Aryl-Rest mit 1 bis 11 C-Atomen steht,
   wobei die beiden Stickstoffatome, an welche der Rest A gebunden ist, durch mindestens zwei C-Atome voneinander getrennt sind und das Amin der Formel (I) insgesamt mindestens 8 C-Atome enthält,
- mit mindestens einem Novolak-Epoxidharz mit einer mittleren Funktionalität im Bereich von 2.5 bis 4.

Als "mittlere Funktionalität" eines Epoxidharzes wird der Mittelwert der Anzahl Epoxidgruppen pro Molekül bezeichnet.
Als "Epoxid-Flüssigharz" wird ein technisches Polyepoxid mit einer Glasübergangstemperatur unterhalb von 25°C bezeichnet.
Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.
Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.
Als "Aminwasserstoff" werden die Wasserstoffatome von primären und sekundären Aminogruppen bezeichnet.
Als "Aminwasserstoff-Equivalentgewicht" wird die Masse eines Amins oder einer Amin-haltigen Zusammensetzung, die ein Molequivalent Aminwasserstoff enthält, bezeichnet. Es wird angegeben in der Masseinheit "g/eq".
Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.
Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.
Als "Gelierzeit" wird die Zeitspanne ab dem Mischen der Komponenten einer Epoxidharz-Zusammensetzung bis zu deren Gelieren bezeichnet.
Eine gestrichelte Linie in den Formeln stellt jeweils die Bindung zwischen einem Substituenten und dem zugehörigen Molekülrest dar.
Als "Raumtemperatur" wird eine Temperatur von 23 °C bezeichnet.
Alle im Dokument erwähnten Industriestandards und Normen beziehen sich auf die zum Zeitpunkt der Einreichung der Erstanmeldung gültigen Fassungen. Gewichtsprozente (Gewichts-%), abgekürzt Gew.-%, bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Im Amin der Formel (I) ist A bevorzugt ausgewählt aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,2-Cyclohexylen, 1,3-Cyclohexylen, 1,4-Cyclohexylen, 4(2)-Methyl-1,3-cyclohexylen, 1,3-Cyclohexylen-bis(methylen) und 1,4-Cyclohexylen-bis(methylen).

Davon bevorzugt ist 1,2-Ethylen oder 1,2-Propylen.

Besonders bevorzugt steht A für 1,2-Ethylen. Diese Amine der Formel (I) ermöglichen niedrigviskose Addukte mit besonders schneller Aushärtung.

Im Amin der Formel (I) ist Y bevorzugt ausgewählt aus der Gruppe bestehend aus H, Methyl, Ethyl, Propyl, Isopropyl, Butyl, Pentyl, Heptyl, Hept-2-yl, Phenyl, 4-Methylphenyl, 1-Naphthyl und Cyclohexyl.

Besonders bevorzugt steht Y für Phenyl oder Cyclohexyl, insbesondere für Phenyl. Ein solches Amin der Formel (I) ermöglicht niedrigviskose Addukte mit besonders schneller und störungsfreier Aushärtung.

Im Amin der Formel (I) steht Z bevorzugt für H, oder das Amin der Formel (I) ist eine Mischung enthaltend Amin der Formel (I) mit Z = H und Amin der Formel (I) mit Z = ---CH₂-Y. Dabei steht Y in den beiden Aminen bevorzugt für den gleichen Rest steht.

Bevorzugt enthält eine Mischung enthaltend Amin der Formel (I) mit Z = H und Amin der Formel (I) mit Z = ---CH₂-Yhöchstens 35 Gewichts-%, bevorzugt höchstens 30 Gewichts-%, Amin der Formel (I) mit Z = ---CH₂-Y bezogen auf die Summe der beiden Amine.

Besonders bevorzugt steht Z für H. Insbesondere beträgt bei einem solchen Amin der Formel (I) der Gehalt an Amin der Formel (I) mit Z = ---CH₂-Y weniger als 5 Gewichts-%. Ein solches Addukt ermöglicht eine besonders schnelle Aushärtung.

Bevorzugt ist das Amin der Formel (I) ausgewählt aus der Gruppe bestehend aus N-Benzyl-1,2-ethandiamin, N,N'-Dibenzyl-1,2-ethandiamin, N-(4-Methylbenzyl)-1,2-ethandiamin, N,N'-Bis(4-methylbenzyl)-1,2-ethandiamin, N-(1-Naphthylmethyl)-1,2-ethandiamin, N,N'-Bis(1-naphthylmethyl)-1,2-ethandiamin, N-Cyclohexylmethyl-1,2-ethandiamin, N,N'-Dicyclohexylmethyl-1,2-ethandiamin, N-Benzyl-1,2-propandiamin und N,N'-Dibenzyl-1,2-propandiamin.

Am meisten bevorzugt stehen A für 1,2-Ethylen und Y für Phenyl. Ein solches Amin der Formel (I) ermöglicht Addukte mit besonders niedriger Viskosität und besonders schneller und störungsfreier Aushärtung.

Das Amin der Formel (I) ist besonders bevorzugt N-Benzyl-1,2-ethandiamin.

Das Amin der Formel (I) ist weiterhin bevorzugt ein Gemisch aus N-Benzyl-1,2-ethandiamin und N,N'-Dibenzyl-1,2-ethandiamin in einem Gewichtsverhältnis im Bereich von 65/35 bis 95/5, bevorzugt 70/30 bis 90/10.

Das Amin der Formel (I) ist bevorzugt hergestellt mittels partieller Alkylierung von mindestens einem Amin der Formel H₂N-A-NH₂ mit mindestens einem Alkylierungsmittel. Bevorzugt ist die Alkylierung eine reduktive Alkylierung, wobei als Alkylierungsmittel ein Aldehyd der Formel Y-CH=O und Wasserstoff eingesetzt werden. Besonders bevorzugt wird dabei ein molarer Überschuss an Amin der Formel H₂N-A-NH₂ mit einem Aldehyd der Formel Y-CH=O reduktiv alkyliert und überschüssiges Amin der Formel H₂N-A-NH₂ aus dem Reaktionsprodukt destillativ entfernt. Diese Herstellung ist besonders für kleine Reste A wie 1,2-Ethylen bevorzugt.
Das Amin der Formel (I) mit Z = H kann anschliessend mittels Destillation von entsprechendem dialkyliertem Amin der Formel (I) mit Z = ---CH₂-Y befreit werden.

Bevorzugt enthält das Amin der Formel (I) nur einen geringen Gehalt an dialkyliertem Amin der Formel (I) mit Z = ---CH₂-Y, insbesondere höchstens 35 Gewichts-%, bevorzugt höchstens 30 Gewichts-%, bezogen auf die Summe der beiden Amine.

Besonders bevorzugt enthält das Amin der Formel (I) mit Z = H weniger als 5 Gewichts-% des entsprechenden dialkylierten Amins der Formel (I) mit Z = ---CH₂-Y. Ein solches Addukt ermöglicht eine besonders schnelle Aushärtung.

Bevorzugt ist das Novolak-Epoxidharz bei Raumtemperatur flüssig.

Bevorzugt hat das Novolak-Epoxidharz eine mittlere Funktionalität im Bereich von 2.7 bis 3.7.

Bevorzugt ist das Novolak-Epoxidharz ein Phenol-Formaldehyd Novolak-Glycidylether. Insbesondere weist es die Formel (II) auf, 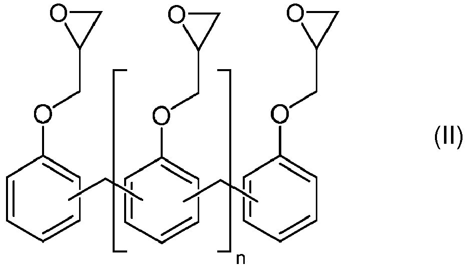 wobei n im Mittel für einen Wert im Bereich von 0.5 bis 2 steht, bevorzugt 0.7 bis 1.7.

Bevorzugt hat das Novolak-Epoxidharz ein mittleres Epoxid-Equivalentgewicht im Bereich von 165 bis 210 g/eq, insbesondere 170 bis 185 g/eq.

Als Novolak-Epoxidharz geeignet sind insbesondere kommerziell verfügbare technische Phenol-Formaldehyd Novolak-Glycidylether, wie insbesondere Epilox^{®} N 18-10 (von Leuna Harze), D.E.N. 431, D.E.N. 438 oder D.E.N. 439 (alle von Olin), Araldite^{®} EPN 1179 oder Araldite^{®} EPN 1180 (alle von Huntsman), Epalloy^{®} 8250, Epalloy^{®} 8330 oder Epalloy^{®} 8350 (alle von Huntsman), oder Epon^{®} Resin 154 oder Epon^{®} Resin 160 (von Momentive).

Bevorzugt erfolgt die Umsetzung zwischen dem Amin der Formel (I) und dem Novolak-Epoxidharz in einem stöchiometrischen Verhältnis von weniger als 3 mol, bevorzugt weniger als 2.6 mol, Amin der Formel (I) auf 1 Mol-Equivalent Epoxidgruppen, insbesondere im Bereich von 1.3 bis 2.5 mol, bevorzugt 1.4 bis 2.1 mol, Amin der Formel (I) auf 1 Mol-Equivalent Epoxidgruppen.
Ein solches Addukt enthält besonders wenig nicht umgesetztes Amin der Formel (I) und einen hohen Gehalt an Addukt-Molekülen. Es ist besonders geruchsarm und dabei überraschend niedrigviskos. Es ermöglicht eine besonders schnelle Aushärtung und eine besonders grosse Flexibilität bei der Kombination mit weiteren Aminen.

Im Fall eines Novolak-Epoxidharzes mit einer hohen Funktionalität im Bereich von 3 bis 4 liegt das stöchiometrische Verhältnis bei der Umsetzung bevorzugt im Bereich von 1.6 bis 2.5 mol, insbesondere 1.8 bis 2.1 mol, Amin der Formel (I) auf 1 Mol-Equivalent Epoxidgruppen.

Bevorzugt liegt die Temperatur bei der Umsetzung im Bereich von 40 bis 120 °C, insbesondere 60 bis 100 °C.

Bevorzugt wird das Amin der Formel (I) vorgelegt und insbesondere auf eine Temperatur im Bereich von 40 bis 100 °C aufgewärmt, bevor das Novolak-Epoxidharz zudosiert und eingemischt wird. Bevorzugt wird das Novolak-Epoxidharz mit einer Temperatur im Bereich von 20 bis 100 °C, insbesondere 50 bis 100 °C, zudosiert. Bevorzugt erfolgt die Zugabe in einer solchen Geschwindigkeit, dass die Reaktionsmischung eine Temperatur von 120 °C, bevorzugt 100 °C, nicht überschreitet.

Nach der Umsetzung wird nicht umgesetztes Amin der Formel (I) bevorzugt nicht aus dem Addukt entfernt, sondern verbleibt in diesem und ist ein Bestandteil des Adduktes.

Das erhaltene Addukt wird unter Ausschluss von Feuchtigkeit aufbewahrt. Es ist geruchsarm, bei Raumtemperatur flüssig und überraschend niedrigkviskos und somit sehr gut handhabbar.

Insbesondere enthält das Addukt oligomere Verbindungen der Formel (III), 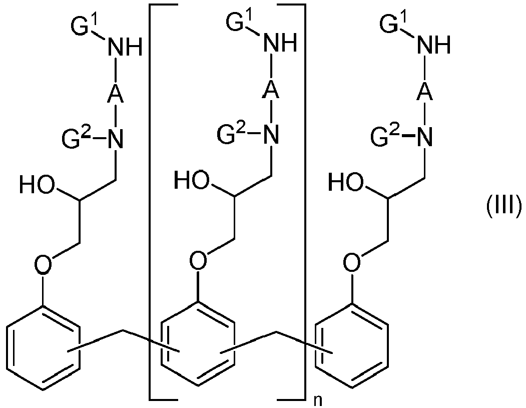 wobei
n im Mittel für einen Wert im Bereich von 0.5 bis 2, bevorzugt 0.7 bis 1.7, steht, G¹ und G² für Z stehen mit der Massgabe, dass mindestens eines der beiden für ---CH₂-Y steht,
und Y und A die bereits genannten Bedeutungen aufweisen.

Weiterhin enthält das Addukt höher adduktierte Anteile, bei welchen mehr als ein Aminwasserstoff eines oder mehrerer Amine der Formel (I) umgesetzt wurde.

Bevorzugt enthält das Addukt weniger als 10 Gewichts-%, bevorzugt weniger als 5 Gewichts-%, insbesondere weniger als 1 Gewichts-%, Verdünner.

Bevorzugt enthält das Addukt weniger als 1 Gewichts-% Wasser.

Bevorzugt hat das Addukt eine Viskosität bei 20 °C im Bereich von 5 bis 500 Pa·s, bevorzugt 10 bis 350 Pa·s, gemessen mittels Kegel-Platten Viskosimeter bei einer Schergeschwindigkeit von 10 s⁻¹.

Das erfindungsgemässe Addukt ist besonders geeignet zum Aushärten eines Epoxidharzes.

Ein weiterer Gegenstand der Erfindung ist ein Härter für Epoxidharze, umfassend das erfindungsgemässe Addukt und mindestens einen weiteren Bestandteil ausgewählt aus der Gruppe bestehend aus weiteren Aminen, Beschleunigern und Verdünnern.

Der Härter enthält bevorzugt 10 bis 80 Gewichts-%, bevorzugt 15 bis 70 Gewichts-%, insbesondere 20 bis 60 Gewichts-%, des erfindungsgemässen Addukts.

Der Härter für Epoxidharze ist bevorzugt nicht wasserbasiert. Er enthält insbesondere weniger als 15 Gewichts-%, bevorzugt weniger als 10 Gewichts-%, Wasser. Ein solcher Härter ist geeignet für nicht-wässrige Epoxidharz-Produkte.

Bevorzugt enthält der Härter mindestens ein weiteres Amin mit aliphatischen Aminogruppen und mindestens drei Aminwasserstoffen, welches bei der Herstellung des Adduktes nicht zugegen war. Dabei kann es sich bei diesem weiteren Amin um das gleiche Amin der Formel (I) handeln wie jenes, welches zur Herstellung des Addukts eingesetzt wurde, oder um ein anderes Amin.

Als weiteres Amin geeignet ist insbesondere N-Benzyl-1,2-ethandiamin, N-Benzyl-1,2-propandiamin, N-Benzyl-1,3-bis(aminomethyl)benzol, N-(2-Ethylhexyl)-1,3-bis(aminomethyl)benzol, 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)-methan, 1-Amino-3-aminomethyl-3,5,5-trimethylcyclohexan (IPDA), 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, Polyoxyalkylendi- oder -triamine, insbesondere Polyoxypropylendiamine oder Polyoxypropylentriamine wie Jeffamine^{®} D-230, Jeffamine^{®} D-400 oder Jeffamine^{®} T-403 (alle von Huntsman), Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 3-(2-Aminoethyl)aminopropylamin, Bis(hexamethylen)triamin (BHMT), N-Aminoethylpiperazin, 3-Dimethylaminopropylamin (DMAPA), 3-(3-(Dimethylamino)propylamino)propylamin (DMAPAPA), aminfunktionelle Addukte der genannten Amine mit Epoxiden oder eine Mischung aus zwei oder mehr dieser Amine.

Besonders bevorzugt enthält der Härter mindestens ein weiteres Amin ausgewählt aus der Gruppe bestehend aus N-Benzyl-1,2-ethandiamin, N,N'-Dibenzyl-1,2-ethandiamin, MPMD, TMD, 1,2-Diaminocyclohexan, 1,3-Bis(aminomethyl)cyclohexan, 1,4-Bis(aminomethyl)cyclohexan, Bis(4-aminocyclohexyl)methan, IPDA, 2(4)-Methyl-1,3-diaminocyclohexan, MXDA, DETA, TETA, TEPA, N3-Amin, N4-Amin, DPTA, BHMT, Polyoxypropylendiaminen mit einem mittlerem Molekulargewicht Mₙ im Bereich von 200 bis 500 g/mol und Polyoxypropylentriaminen mit einem mittlerem Molekulargewicht Mₙ im Bereich von 300 bis 500 g/mol.

Davon bevorzugt ist 1,3-Bis(aminomethyl)cyclohexan oder 1,4-Bis(aminomethyl)-cyclohexan, insbesondere 1,3-Bis(aminomethyl)cyclohexan. Damit wird eine besonders schnelle Aushärtung ermöglicht.

Davon weiterhin bevorzugt ist IPDA. Damit werden besonders hohe Glasübergangstemperaturen erreicht, was eine besonders gute Robustheit gegenüber hohen Gebrauchstemperaturen ermöglicht.

Davon weiterhin bevorzugt ist MXDA. Damit werden hohe Aushärtegeschwindigkeiten und besonders hohe Festigkeiten erreicht, und insbesondere eine besonders hohe Wärmeschockbeständigkeit.

Davon weiterhin bevorzugt ist N-Benzyl-1,2-ethandiamin. Damit werden besonders niedrigviskose Epoxidharz-Produkte mit besonders schönen Oberflächen erhalten.

Bevorzugt enthält der Härter eine solche Menge an weiteren Aminen, dass 5 bis 70 %, bevorzugt 7 bis 55 %, insbesondere 10 bis 40 %, aller vorhandenen Aminwasserstoffe vom erfindungsgemässen Addukt stammen.

Geeignete Beschleuniger sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; Nitrate wie insbesondere Calciumnitrat; tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]-undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.
Bevorzugt sind Säuren, Nitrate, tertiäre Amine oder Mannich-Basen, insbesondere Salicylsäure, Calciumnitrat oder 2,4,6-Tris(dimethylaminomethyl)phenol, oder eine Kombination dieser Beschleuniger.

Geeignete Verdünner sind insbesondere n-Propanol, Isopropanol, n-Butanol, Isobutanol, tert.Butanol, 1-Pentanol, 2-Pentanol, 3-Pentanol, 2-Methyl-1-butanol, 3-Methyl-1-butanol, 3-Methyl-2-butanol n-Hexanol, 2-Ethylhexanol, Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, 2,2,4-Trimethyl-1,3-pentandiolmonoisobutyrat, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol, styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Davon bevorzugt sind Verdünner mit einem Siedepunkt von mehr als 200 °C, insbesondere Benzylalkohol, styrolisiertem Phenol, ethoxyliertes Phenol, phenolgruppenhaltige aromatische Kohlenwasserstoffharze wie insbesondere die Novares^{®}-Typen LS 500, LX 200, LA 300 oder LA 700 (von Rütgers), Diisopropylnaphthalin oder Cardanol, insbesondere Benzylalkohol.
Phenolgruppen-haltige Verdünner zeigen auch eine Wirkung als Beschleuniger.

Davon weiterhin bevorzugt sind wenig toxische, geruchsarme Verdünner mit einem Siedepunkt im Bereich von 90 bis 150 °C, insbesondere n-Butanol, 1-Pentanol, 3-Pentanol, 3-Methyl-1-butanol oder 3-Methyl-2-butanol. Solche Verdünner ermöglichen geruchsarme, gut verarbeitbare Korrosionsschutz-Beschichtungen, bei welchen der Verdünner in vergleichsweise kurzer Zeit verdampft ist und kaum in eine allfällig über der Korrosionsschutz-Beschichtung angebrachte Isolation eindringen und diese schädigen kann.

Davon bevorzugt sind weiterhin aromatische Verdünner mit einer besonders hohen verdünnenden Wirkung, insbesondere Xylol.

Der Härter kann weitere Bestandteile enthalten, insbesondere die Folgenden:
- weitere Addukte, insbesondere Addukte von MPMD oder 1,2-Ethandiamin oder 1,2-Propandiamin mit Kresylglycidylether, bei welchen nicht umgesetztes MPMD, 1,2-Ethandiamin oder 1,2-Propandiamin nach der Umsetzung destillativ entfernt wurde;
- Monoamine wie insbesondere Benzylamin oder Furfurylamin;
- Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere DETA oder TETA;
- Mannich-Basen, insbesondere Phenalkamine, also Umsetzungsprodukte von Phenolen, insbesondere Cardanol, mit Aldehyden, insbesondere Formaldehyd, und Polyaminen;
- aromatische Polyamine wie insbesondere 4,4'-, 2,4' und/oder 2,2'-Diaminodiphenylmethan, 2,4(6)-Toluoldiamin, 3,5-Dimethylthio-2,4(6)-toluoldiamin oder 3,5-Diethyl-2,4(6)-toluylendiamin;
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol.

Ein weiterer Gegenstand der vorliegenden Erfindung ist eine Epoxidharz-Zusammensetzung umfassend
- eine Harz-Komponente enthaltend mindestens ein Epoxidharz und
- eine Härter-Komponente enthaltend mindestens ein erfindungsgemässes Addukt oder den vorgängig beschriebenen Härter.

Bevorzugt umfasst die Härter-Komponente den vorgängig beschriebenen Härter.

Ein geeignetes Epoxidharz wird auf bekannte Art und Weise erhalten, insbesondere aus der Reaktion von Epichlorhydrin mit Polyolen, Polyphenolen oder Aminen.

Geeignete Epoxidharze sind insbesondere aromatische Epoxidharze, insbesondere die Glycidylether von:
- Bisphenol A, Bisphenol F oder Bisphenol A/F, wobei A für Aceton und F für Formaldehyd steht, welche als Edukte zur Herstellung dieser Bisphenole dienten. Im Fall von Bisphenol F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzcatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]-benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.

Bevorzugt ist das Epoxidharz ein Flüssigharz oder eine Mischung enthaltend zwei oder mehr Epoxid-Flüssigharze.
Als "Epoxid-Flüssigharz" wird ein technisches Polyepoxid mit einer Glasübergangstemperatur unterhalb von 25°C bezeichnet.
Gegebenenfalls enthält die Harz-Komponente zusätzlich Anteile von Epoxid-Festharz.

Das Epoxidharz ist insbesondere ein Flüssigharz auf der Basis eines Bisphenols oder von Novolaken, insbesondere mit einem mittleren Epoxid-Equivalentgewicht im Bereich von 156 bis 210 g/eq.

Besonders geeignet ist ein Bisphenol-A Diglycidylether und/oder Bisphenol-F-Diglycidylether, wie sie kommerziell beispielsweise von Olin, Huntsman oder Momentive erhältlich sind. Diese Flüssigharze weisen eine für Epoxidharze niedrige Viskosität auf und ermöglichen eine schnelle Aushärtung und hohe Härten. Sie können Anteile von Bisphenol A-Festharz oder Novolak-Epoxidharzen enthalten.

Weiterhin besonders geeignet ist ein Novolak-Epoxidharz, insbesondere ein Phenol-Formaldehyd Novolak-Glycidylether, insbesondere mit einer mittleren Funktionalität im Bereich von 2.3 bis 4, bevorzugt 2.5 bis 3. Damit werden Beschichtungen mit besonders guten Korrosionsschutz-Eigenschaften erhalten. Sie können Anteile von weiteren Epoxidharzen enthalten, insbesondere Bisphenol-A Diglycidylether oder Bisphenol-F-Diglycidylether.

Die Harz-Komponente kann einen Reaktivverdünner enthalten.
Als Reaktivverdünner bevorzugt sind Epoxidgruppen-haltige Reaktivverdünner, insbesondere Butandioldiglycidylether, Hexandioldiglycidylether, Trimethylolpropandi- oder triglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃-bis C₁₅-Alkylglycidylether.

Bevorzugt enthält die Epoxidharz-Zusammensetzung mindestens einen weiteren Bestandteil ausgewählt aus der Gruppe bestehend aus Verdünnern, Beschleunigern, Pigmenten und Füllstoffen.

Als Beschleuniger geeignet sind insbesondere die bereits genannten.
Als Verdünner geeignet sind insbesondere die bereits genannten.

Als Pigment geeignet sind insbesondere Korrosionsschutzpigmente, Titandioxide, Eisenoxide, Chrom(III)oxide, organische Pigmente oder Russ, insbesondere Korrosionsschutzpigmente und/oder Titandioxide.
Geeignete Korrosionsschutzpigmente sind insbesondere Phosphor-haltige Korrosionsschutzpigmente, insbesondere Phosphate, Orthophosphate oder Polyphosphate, welche als Gegenion insbesondere Chrom, Zink, Aluminium, Kalzium, Strontium oder eine Kombination dieser Metalle enthalten. Besonders geeignet ist ein Zink-Orthophosphat, Zink-Aluminium-Orthophosphat, Kalziumphosphat, Zink-Polyphosphat, Zink-Aluminium-Polyphosphat oder Strontium-Aluminium-Polyphosphat, insbesondere ein organisch modifiziertes basisches Zink-Orthophosphathydrat.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsiebe, Aluminiumoxid, Zinkoxid, Aluminium-dotiertes Zinkoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln. Davon bevorzugt sind Calciumcarbonat, Baryt, Quarzmehl, Talk, Aluminiumpulver oder eine Kombination davon.

Gegebenenfalls enthält die Epoxidharz-Zusammensetzung weitere Hilfs- und Zusatzstoffe, insbesondere die Folgenden:
- Reaktivverdünner, insbesondere die bereits vorgängig erwähnten, oder epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine;
- Fasern, insbesondere Glasfasern, Kohlefasern, Metallfasern, Keramikfasern oder Kunststofffasern wie Polyamidfasern oder Polyethylenfasern;
- Nanofüllstoffe, insbesondere Carbon Nanotubes;
- Rheologie-Modifizierer, insbesondere Verdicker oder Antiabsetzmittel;
- Haftverbesserer, insbesondere Organoalkoxysilane;
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine; oder
- Additive, insbesondere Entschäumer, Entlüfter, Netzmittel, Dispergiermittel, Verlaufsmittel, dispergiertes Paraffinwachs, Stabilisatoren gegen Oxidation, Wärme, Licht oder UV-Strahlung oder Biozide.

Bevorzugt enthält die Epoxidharz-Zusammensetzung weitere Hilfs- und Zusatzstoffe, insbesondere Pigmente, Netzmittel, Verlaufsmittel und/oder Entschäumer.

Bevorzugt enthält die Epoxidharz-Zusammensetzung nur einen geringen Gehalt an Verdünnern. Bevorzugt enthält sie weniger als 35 Gewichts-%, besonders bevorzugt weniger als 20 Gewichts-%, insbesondere weniger als 15 Gewichts-%, Verdünner.

Bevorzugt enthält die Epoxidharz-Zusammensetzung nur einen geringen Gehalt an Wasser, bevorzugt weniger als 5 Gewichts-%, insbesondere weniger als 1 Gewichts-%, Wasser.

Die Harz- und die Härter-Komponente der Epoxidharz-Zusammensetzung werden in voneinander getrennten Gebinden gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ebenfalls möglich ist, dass weitere Bestandteile als eigene, weitere Komponente vorhanden sind.
Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die Harz- und die Härter-Komponente werden kurz vor oder während der Applikation vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.7 bis 1.2, liegt. In Gewichtsteilen liegt das Mischungsverhältnis zwischen der Harz- und der Härter-Komponente typischerweise im Bereich von 1:2 bis 20:1, bevorzugt 1:1 bis 20:1. Das Mischen der Komponenten erfolgt kontinuierlich oder batchweise mittels eines geeigneten Verfahrens, wobei darauf zu achten ist, dass zwischen dem Mischen der Komponenten und der Applikation nicht zu viel Zeit vergeht und die Applikation innerhalb der Topfzeit erfolgt. Das Mischen und die Applikation erfolgen insbesondere bei Umgebungstemperatur, welche typischerweise im Bereich von etwa 5 bis 40°C, bevorzugt bei etwa 10 bis 35°C, liegt.

Mit dem Mischen der Komponenten beginnt die Aushärtung der Epoxidharz-Zusammensetzung durch chemische Reaktion. Primäre und sekundäre Aminogruppen und gegebenenfalls vorhandene weitere gegenüber Epoxidgruppen reaktive Grupen reagieren mit den Epoxidgruppen unter deren Ringöffnung. Als Ergebnis hauptsächlich dieser Reaktionen polymerisiert die Zusammensetzung und härtet dadurch aus.
Die Aushärtung erstreckt sich typischerweise über einige Stunden bis Tage. Die Dauer hängt unter anderem von der Temperatur, der Reaktivität der Bestandteile, deren Stöchiometrie und der Gegenwart bzw. Menge von Beschleunigern ab.

Im frisch vermischten Zustand hat die Epoxidharz-Zusammensetzung eine niedrige Viskosität. Bevorzugt liegt die Viskosität 5 Minuten nach dem Mischen der Harz- und der Härter-Komponente bei 20 °C im Bereich von 0.3 bis 20 Pa·s, bevorzugt 0.3 bis 10 Pa·s, besonders bevorzugt 0.3 bis 5 Pa·s, insbesondere 0.3 bis 2 Pa·s, gemessen mittels Kegel-Platten Viskosimeter bei einer Schergeschwindigkeit von 10s⁻¹.

Die Applikation der Epoxidharz-Zusammensetzung erfolgt auf mindestens ein Substrat, wobei die Folgenden besonders geeignet sind:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke, insbesondere beschichtete Böden, welche mit einer weiteren Bodenbelagsschicht überschichtet werden.
Die Substrate können bei Bedarf vor dem Applizieren vorbehandelt werden, insbesondere durch physikalische und/oder chemische Reinigungsverfahren oder das Aufbringen eines Aktivators oder eines Primers.

Besonders bevorzugt als Substrat sind Metalle oder Legierungen, insbesondere Stahl. Ein solches Substrat wird durch das Addukt in der Epoxidharz-Zusammensetzung besonders gut gegen Korrosion geschützt.

Aus der Aushärtung der Epoxidharz-Zusammensetzung wird eine ausgehärtete Zusammensetzung erhalten.

Die Epoxidharz-Zusammensetzung wird bevorzugt verwendet als Beschichtung, Primer, Klebstoff, Dichtstoff, Vergussmasse, Giessharz, Imprägnierharz oder als Matrix für Faserverbundwerkstoffe (Composites) wie insbesondere CFK oder GFK.

Besonders bevorzugt wird die Epoxidharz-Zusammensetzung als Beschichtung verwendet. Als Beschichtung werden dabei flächig aufgebrachte Beläge aller Art verstanden, insbesondere Bodenbeläge, Anstriche, Lacke, Versiegelungen, Grundierungen, Primer oder Schutzbeschichtungen, insbesondere Korrosionsschutz-Beschichtungen für leichten oder schweren Korrosionsschutz.

Besonders geeignet ist die Epoxidharz-Zusammensetzung als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen, Gefässen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, oder als Voranstrich, Haftanstrich, Korrosionsschutz-Primer oder zur Hydrophobierung von Oberflächen.

Ganz besonders geeignet ist die Epoxidharz-Zusammensetzung als Korrosionsschutz-Beschichtung, insbesondere auch als Korrosionschutz-Beschichtung für isolierte Rohre oder Gefässe aus Stahl, wobei sie besonders geeignet ist als Schutzbeschichtung gegen Korrosion unter der Isolation (corrosion under insulation, abgekürzt CUI). Dabei hat sich gezeigt, dass die erfindungsgemässe Epoxidharz-Zusammensetzung über eine hohe Wärmeschockbeständigkeit gemäss DIN EN ISO 19277 verfügt. Sie übersteht bei einer Schichtdicke von 250 µm auf Stahl mehrfache schockartige Temperaturwechsel zwischen Eiswasser und 200 °C ohne Rissbildung.

Für die Verwendung als Beschichtung weist die Epoxidharz-Zusammensetzung bevorzugt eine besonders niedriger Viskosität und gute Verlaufseigenschaften auf. Die vermischte Zusammensetzung wird innerhalb der Topfzeit typischerweise flächig als dünner Film mit einer Schichtdicke von etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel, oder mittels Pinsel oder Rolle oder einem Spritzverfahren. Bei der Aushärtung entstehen typischerweise weitgehend homogene, glänzende und nichtklebrige Filme von hoher Härte, welche eine gute Haftung zu verschiedensten Substraten aufweisen.

Dabei wird die Epoxidharz-Zusammensetzung insbesondere in einem Verfahren zum Beschichten eingesetzt, umfassend die Schritte
(i) Applizieren der vermischten Epoxidharz-Zusammensetzung auf ein Substrat innerhalb der Topfzeit, gefolgt von der Aushärtung der Zusammensetzung,
(ii) gegebenenfalls Applizieren einer weiteren Schicht der vermischten Epoxidharz-Zusammensetzung auf die ausgehärtete Schicht innerhalb der Topfzeit,
(iii) gegebenenfalls Wiederholen von Schritt (ii), und
(iv) gegebenenfalls Applizieren einer weiteren Zusammensetzung auf die ausgehärtete Schicht, wobei es sich dabei um eine weitere Epoxidharz-Zusammensetzung handeln kann, aber auch um ein anderes Material, insbesondere um eine Polyurethan- oder Polyharnstoff-Beschichtung.

Für den Fall, dass die Epoxidharz-Zusammensetzung als mehrschichtinge Beschichtung eingesetzt wird, verfügt sie über eine besonders gute Zwischenhaftung.

Weiterhin besonders bevorzugt wird die Epoxidharz-Zusammensetzung als Klebstoff verwendet. Typischerweise weist die Epoxidharz-Zusammensetzung bei der Verwendung als Klebstoff nach dem Vermischen der Komponenten eine pastöse Konsistenz mit strukturviskosen Eigenschaften auf. Bei der Applikation wird der vermischte Klebstoff innerhalb der Topfzeit auf mindestens eines der zu verklebenden Substrate aufgetragen und die beiden Substrate innerhalb der Offenzeit des Klebstoffs zu einer Verklebung gefügt.
Der vermischte Klebstoff wird insbesondere mittels Pinsel, Rolle, Spatel, Rakel, Kelle, oder aus einer Tube, Kartusche oder Dosiervorrichtung appliziert bzw. aufgetragen.

Der Klebstoff ist besonders geeignet für Verwendungen in der Bauindustrie, insbesondere für die Armierung von Bauwerken mittels Stahllamellen oder Lamellen aus Kohlefaser-verstärkten Composite-Kunststoffen (CFK), für Konstruktionen, welche geklebte Beton-Fertigteile enthalten, insbesondere Brücken oder Betontürme für beispielsweise Windkraftanlagen, Schächte, Rohrleitungen oder Tunnels, oder für Konstruktionen, welche geklebte Natursteine, keramische Elemente oder Teile aus Faserzement, Stahl, Gusseisen, Aluminium, Holz oder Polyester enthalten, für die Verankerung von Dübeln oder Stahlstäben in Bohrlöchern, für die Fixierung von beispielsweise Geländern, Brüstungen oder Türrahmen, für Reparaturen wie insbesondere die Verfüllung von Kanten, Löchern oder Fugen bei der Betoninstandsetzung, oder für das Aufkleben von Folien aus Polyvinylchlorid (PVC), flexibilisiertem Polyolefin (Combiflex^{®}) oder haftungsmodifiziertem chlorsulfoniertem Polyethylen (Hypalon^{®}) auf Beton oder Stahl. Weitere Einsatzgebiete betreffen das strukturelle Kleben in der Bau- oder Fertigungsindustrie, insbesondere als Klebemörtel, Montageklebstoff, Armierungsklebstoff wie insbesondere für das Verkleben von Lamellen aus CFK oder Stahl auf Beton, Mauerwerk oder Holz, als Element-Klebstoff für beispielsweise Brückenelemente, Sandwichelementklebstoff, Fassadenelementklebstoff, Verstärkungsklebstoff, Karrosserieklebstoff oder Halbschalenklebstoff für Rotorblätter von Windturbinen.

Dabei wird die Epoxidharz-Zusammensetzung insbesondere in einem Verfahren zum Verkleben eingesetzt, umfassend die Schritte
(i) Vermischen der Komponenten der Epoxidharz-Zusammensetzung,
(ii) Applizieren der vermischten Zusammensetzung innerhalb der Topfzeit,
   - entweder auf mindestens eines der zu verklebenden Substrate und Fügen der Substrate zu einer Verklebung innerhalb der Offenzeit,
   - oder in einen Hohlraum oder Spalt zwischen mehreren Substraten und gegebenenfalls Einfügen eines Ankers in den Hohlraum oder Spalt innerhalb der Offenzeit,
   gefolgt von der Aushärtung der vermischten Zusammensetzung.

Als "Anker" wird dabei insbesondere ein Armierungseisen, ein Gewindestab oder ein Bolzen bezeichnet. Ein solcher wird insbesondere so in einer Mauer, Wand, Decke oder in einem Fundament eingeklebt bzw. verankert, dass ein Teil davon kraftschlüssig verklebt ist und ein Teil davon vorsteht und konstruktiv belastet werden kann.

Verklebt werden können gleichartige oder verschiedene Substrate.

Aus der Applikation und Aushärtung der Epoxidharz-Zusammensetzung wird ein Artikel erhalten.

Ein weiterer Gegenstand der Erfindung ist somit ein Artikel, erhalten aus der Verwendung der Epoxidharz-Zusammensetzung.

Der Artikel ist bevorzugt ein Bauwerk oder ein Teil davon, insbesondere ein Bauwerk des Hoch- oder Tiefbaus, ein Büro, eine Industriehalle, eine Turnhalle, ein Kühlraum, ein Silo, eine Brücke, ein Dach, ein Treppenhaus, ein Fussboden, ein Balkon, eine Terrasse oder ein Parkdeck, oder ein industrielles Gut oder ein Konsumgut, insbesondere ein Pier, eine Offshore-Plattform, ein Schleusentor, ein Kran, eine Spundwand, eine Rohrleitung, ein isoliertes Gefäss oder ein Rotorblatt einer Windkraftanlage, oder ein Transportmittel wie insbesondere ein Automobil, ein Lastkraftwagen, ein Schienenfahrzeug, ein Schiff, ein Flugzeug oder ein Helikopter, oder ein Anbauteil davon.

Die erfindungsgemässe Epoxidharz-Zusammensetzung ist bei Umgebungstemperaturen gut verarbeitbar, härtet überraschend schnell aus und bildet dabei ebenmässige, fehlerfreie Oberflächen mit geringer Neigung zum Vergilben. Sie ist insbesondere geeignet als ästhetisch hochwertige Korrosionsschutz-Beschichtung, welche robust gegenüber Feuchtigkeit ist, auch in Kombination mit Hitze und/oder Salzen, und über eine besonders gute Wärmeschockbeständigkeit und Zwischenhaftung verfügt.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-PlattenAbstand 0.05 mm, Scherrate 10 s⁻¹) gemessen.

Die **Aminzahl** wurde durch Titration bestimmt (mit 0.1N HClO₄ in Essigsäure gegen Kristallviolett).

### Verwendete Substanzen und Abkürzungen:

| | |
|---|---|
| D.E.N.^{®} 431: | Phenol-Formaldehyd Novolak-Glycidylether, EEW ca.175 g/eq, mittlere Funktionalität ca. 2.8 (von Olin) |
| D.E.N.^{®} 438: | Phenol-Formaldehyd Novolak-Glycidylether), EEW ca. 180 g/eq, mittlere Funktionalität ca. 3.6 (von Olin) |
| Epilox^{®} N 18-10 | Phenol-Formaldehyd Novolak-Glycidylether, EEW ca. 175 g/eq, mittlere Funktionalität ca. 2.6 (von Leuna Harze) |
| Araldite^{®} GY 250: | Bisphenol A-Diglycidylether, EEW ca. 187 g/eq (von Huntsman) |
| Araldite^{®} DY-E: | Monoglycidylether von C₁₂- bis C₁₄-Alkoholen, EEW ca. 290 g/eq (von Huntsman) |
| B-EDA | N-Benzyl-1,2-ethandiamin, hergestellt wie nachfolgend beschrieben, 150.2 g/mol, AHEW 50.1 g/eq |
| IPDA | 3-Aminomethyl-3,5,5-trimethylcyclohexylamin, AHEW 42.6 g/eq (Vestamin^{®} IPD, von Evonik) |

### N-Benzyl-1,2-ethandiamin (B-EDA):

180.3 g (3 mol) 1,2-Ethandiamin wurden bei Raumtemperatur vorgelegt, mit einer Lösung aus 106.0 g (1 mol) Benzaldehyd in 1200 ml Isopropanol vermischt und 2 Stunden gerührt, anschliessend bei 80°C, 80 bar Wasserstoff-Druck und einem Fluss von 5 ml/min auf einer kontinuierlich arbeitenden Hydrierapparatur mit Pd/C-Festbettkatalysator hydriert und die hydrierte Lösung am Rotationsverdampfer bei 65°C eingeengt, wobei unreagiertes 1,2-Ethandiamin, Wasser und Isopropanol entfernt wurden. Die so erhaltene Reaktionsmischung wurde bei 80°C unter Vakuum mittels Destillation gereinigt. Erhalten wurde eine farblose Flüssigkeit mit einem mittels GC bestimmten Gehalt an N-Benzyl-1,2-ethandiamin von > 97%.

### Herstellung von Addukten:

### Addukt A1:

55.0 g N-Benzyl-1,2-ethandiamin (B-EDA, 0.366 mol) wurden auf 80 °C erwärmt und unter gutem Rühren langsam 33.0 g D.E.N.^{®} 438 (0.183 mol EP-Gruppen), welches auf eine Temperatur von 60 °C aufgewärmt war, zugegeben, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 24.1 Pa·s, einer Aminzahl von 460 mg KOH/g und einem berechneten AHEW von 96.2 g/eq erhalten.

### Addukt A2:

55.0 g N-Benzyl-1,2-ethandiamin (B-EDA, 0.366 mol) wurden auf 80 °C erwärmt und unter gutem Rühren langsam 32.0 g D.E.N.^{®} 431 (0.183 mol EP-Gruppen), welches auf eine Temperatur von 60 °C aufgewärmt war, zugegeben, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 8.4 Pa·s, einer Aminzahl von 464 mg KOH/g und einem berechneten AHEW von 95.1 g/eq erhalten.

### Addukt A3:

55.0 g N-Benzyl-1,2-ethandiamin (B-EDA, 0.366 mol) wurden auf 80 °C erwärmt und unter gutem Rühren langsam 42.7 g D.E.N.^{®} 431 (0.244 mol EP-Gruppen), welches auf eine Temperatur von 60 °C aufgewärmt war, zugegeben, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 256 Pa·s, einer Aminzahl von 404 mg KOH/g und einem berechneten AHEW von 114.4 g/eq erhalten.

### Addukt A4 (Ref.):

55.0 g N-Benzyl-1,2-ethandiamin (B-EDA, 0.366 mol) wurden auf 80 °C erwärmt und unter gutem Rühren langsam 45.0 g Araldite^{®} GY 250 (0.241 mol EP-Gruppen) zugegeben, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 262 Pa·s, einer Aminzahl von 408 mg KOH/g und einem berechneten AHEW von 116.3 g/eq erhalten.

### Addukt A5 (Ref.):

47.7 g 1,2-Diaminocyclohexan (Dytek^{®} DCH-99, von Invista, 0.42 mol) wurden vorgelegt und auf 60 °C erwärmt. Unter gutem Rühren wurden langsam 37.6 g D.E.N.^{®} 438 (0.21 mol EP-Gruppen), vorgewärmt auf 60 °C, zugegeben, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche, hochviskose Flüssigkeit mit einer Viskosität bei 50 °C von 98 Pa·s, einer Aminzahl von 532 mg KOH/g und einem berechneten AHEW von 58.3 g/eq erhalten.

### Addukt A6 (Ref.):

90.0 g Bis(6-aminohexyl)amin (Dytek^{®} BHMT-HP, von Invista, 0.42 mol) wurden vorgelegt und auf 60 °C erwärmt. Unter gutem Rühren wurden langsam 37.6 g D.E.N.^{®} 438 (0.21 mol EP-Gruppen), vorgewärmt auf 60 °C, zugegeben, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 22.5 Pa·s, einer Aminzahl von 529 mg KOH/g und einem berechneten AHEW von 67.9 g/eq erhalten.

### Herstellung von Epoxidharz-Beschichtungen:

### Beispiele 1 bis 11:

Für jedes Beispiel wurden die in den Tabellen 1 und 2 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.
Ebenso wurden die in den Tabellen 1 und 2 angegebenen Inhaltsstoffe der Härter-Komponente verarbeitet und aufbewahrt.
Anschliessend wurden die beiden Komponenten jeder Zusammensetzung mittels des Zentrifugalmischers zu einer homogenen Flüssigkeit verarbeitet und diese unverzüglich folgendermassen geprüft:
Die **Viskosität** wurde 5 min nach dem Vermischen der Harz- und der Härter-Komponente wie beschrieben bei einer Temperatur von 20 °C gemessen.
Die **Gelierzeit** wurde bestimmt, indem eine frisch vermischte Menge von ca. 3 g im Normklima mit einem Spatel in regelmässigen Abständen bewegt wurde, bis die Masse gelierte.
Die **Shore D** Härte wurde bestimmt nach DIN 53505 an zwei zylindrischen Prüfkörpern (Durchmesser 20 mm, Dicke 5 mm), wobei einer im Normklima und einer bei 8°C und 80% relativer Feuchtigkeit gelagert und die Härte jeweils nach 1 Tag und nach 2 Tagen gemessen wurde.
Der **Aspekt (NK)** wurde bestimmt an einem Film, welcher in einer Schichtdicke von 500 µm auf eine Glasplatte aufgezogen und während 14 Tagen im Normklima gelagert wurde. Als "schön" wurde ein Film bezeichnet, welcher eine glänzende und nichtklebrige Oberfläche ohne Struktur aufwies. Als "Struktur" wird dabei jegliche Art von Zeichnung oder Muster auf der Oberfläche bezeichnet.

Der **Aspekt (8°/80%)** wurde bestimmt einem Film, welcher in einer Schichtdicke von 500 µm auf eine Glasplatte aufgezogen und während 7 Tagen bei 8°C und 80% Luftfeuchtigkeit und anschliessend während 7 Tagen im Normklima gelagert wurde. 24 Stunden nach der Applikation wurde ein Flaschendeckel aus Polypropylen auf den Film aufgesetzt, unter welchem ein feuchter Schwamm platziert war. Nach weiteren 24 Stunden wurden der Schwamm und der Deckel entfernt und an einer neuen Stelle des Films platziert, wo sie nach 24 Stunden wieder entfernt und neu platziert wurden, insgesamt 4 mal. Anschliessend wurde der Aspekt dieses Films beurteilt wie für den Aspekt (NK) beschrieben. Als **"Blushing"** wurde die Anzahl weiss verfärbter Flecken angegeben, welche durch den feuchten Schwamm entstanden waren. Als "(1)" wurde ein schwacher, leicht weiss verfärbter Fleck bezeichnet.
Von einigen Filmen wurde zusätzlich die **Königshärte** (Pendelhärte nach König, gemessen nach DIN EN ISO 1522) bestimmt. Dazu wurde ein erster Film in einer Schichtdicke von 500 µm auf eine Glasplatte aufgezogen, im Normklima gelagert und die Königshärte nach 1 Tag ("Königshärte (1d NK)"), nach 2 Tagen ("Königshärte (2d NK)"), nach 7 Tagen ("Königshärte (7d NK)") und nach 14 Tagen ("Königshärte (14d NK)") bestimmt. Weiterhin wurde ein zweiter Film in einer Schichtdicke von 500 µm auf eine Glasplatte aufgezogen und dieser unmittelbar nach dem Applizieren während 7 Tagen bei 8°C und 80% relativer Feuchtigkeit und anschliessend während 2 Wochen im Normklima gelagert, wobei die Königshärte nach 7 Tagen bei 8°C und 80% relativer Feuchtigkeit ("Königshärte (7d 8°/80%)") und dann nach weiteren 2 Tagen im NK ("Königshärte (+2d NK)") bzw. 7 Tagen im NK ("Königshärte (+7d NK)") bzw. 14d im NK ("Königshärte (+14d NK)") gemessen wurde.
Als Mass für die Vergilbung wurde weiterhin die Farbveränderung nach Belastung in einem Bewitterungstester bestimmt (**Q-Sun (72h)**). Dazu wurde ein weiterer Film in einer Schichtdicke von 500 µm auf eine Glasplatte aufgezogen und dieser im Normklima während 14 Tagen gelagert und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet. Anschliessend wurde der Farbunterschied **ΔE** des so belasteten Films im Vergleich zu einem entsprechenden nicht belasteten Film mittels eines Colorimeters NH310 von Shenzen 3NH Technology Co. LTD, ausgerüstet mit Silicon Photoelectric Diode Detector, Light Source A, Color Space Measurement Interface CIE L*a*b*C*H*, bestimmt.

Die Resultate sind in den Tabellen 1 und 2 angegeben.
Die mit "(Ref.)" bezeichneten Beispiele sind Vergleichsbeispiele.

**Tabelle 1: Zusammensetzung und Eigenschaften der Beispiele 1 bis 6.**

| **Beispiel** | | **1** | **2** | **3** | **4 (Ref.)** | **5 (Ref.)** | **6 (Ref.)** |
|---|---|---|---|---|---|---|---|
| **Harz-Komponente:** | | | | | | | |
| Araldite^{®} GY 250: | | 167.2 | 167.2 | 167.2 | 167.2 | 167.2 | 167.2 |
| Araldite^{®} DY-E: | | 31.8 | 31.8 | 31.8 | 31.8 | 31.8 | 31.8 |

| **Härter-Komponente:** | | | | | | | |
|---|---|---|---|---|---|---|---|
| | Addukt **A1** | 96.2 | - | - | - | - | - |
| | Addukt **A2** | - | 95.1 | - | - | - | - |
| | Addukt **A3** | - | - | 114.4 | - | - | - |
| | Addukt **A4** | - | - | - | 116.3 | - | - |
| | Addukt **A5** | - | - | - | - | 58.3 | - |
| | Addukt **A6** | - | - | - | - | - | 67.9 |
| Viskosität (5') [Pa·s] | | 5.9 | 4.2 | 19.4 | 15.0 | n.b.¹ | 2.0 |
| Gelierzeit (h:min) | | 2:30 | 2:40 | 2:20 | 2:40 | n.b.¹ | 3:30 |
| Shore D | (1d NK) | 82 | 81 | 82 | 78 | n.m.2 | 67 |
| | (2d NK) | 82 | 82 | 82 | 78 | 45 | 72 |
| Shore D | (1d 8°/80%) | 74 | 74 | 74 | 74 | n.m.2 | 16 |
| | (2d 8°/80%) | 78 | 78 | 78 | 75 | n.m.2 | 44 |
| Aspekt (NK) | | schön | schön | schön | schön | Struktur | trüb |
| Aspekt (8°/80%) | | schön | schön | schön | schön | klebrig, flüssig | trüb, uneben |
| Blushing | | 0 | (1) | (1) | (1) | n.m.³ | n.m.3 |
| Q-Sun (72h) ΔE | | 2.5 | 3.0 | 3.5 | 2.1 | n.b. | n.b. |

| | | | | | | | |
|---|---|---|---|---|---|---|---|
| ¹ nicht bestimmt (sehr hochviskos) ² nicht messbar (zu weich) ³ nicht messbar (Oberfläche zu inhomogen für eine Beurteilung) "n.b." steht für "nicht bestimmt" | | | | | | | |

**Tabelle 2: Zusammensetzung und Eigenschaften der Beispiele 7 bis 11.**

| **Beispiel** | | **7** | **8** | **9 (Ref.)** | **10 (Ref.)** | **11 (Ref.)** |
|---|---|---|---|---|---|---|
| **Harz-Komponente:** | | | | | | |
| Araldite^{®} GY 250: | | 167.2 | 167.2 | 167.2 | 167.2 | 167.2 |
| Araldite^{®} DY-E: | | 31.8 | 31.8 | 31.8 | 31.8 | 31.8 |

| **Härter-Komponente:** | | | | | | |
|---|---|---|---|---|---|---|
| | Addukt **A1** | 38.5 | - | - | - | - |
| | Addukt **A3** | - | 38.0 | - | - | - |
| | Addukt **A4** | - | - | 46.5 | - | - |
| | Addukt **A5** | - | - | - | 23.3 | - |
| | Addukt **A6** | - | - | - | - | 27.2 |
| | IPDA | 25.8 | 25.8 | 25.8 | 25.8 | 25.8 |
| Benzylalkohol | | 25.0 | 25.0 | 25.0 | 25.0 | 25.0 |
| Viskosität (5') [Pa·s] | | 1.12 | 1.45 | 1.46 | 1.07 | 0.91 |
| Gelierzeit (h:min) | | 3:25 | 3:20 | 3:30 | 4:15 | 3:20 |
| Shore D | (1d NK) | 66 | 67 | 65 | 68 | 68 |
| | (2d NK) | 78 | 78 | 78 | 78 | 76 |
| Shore D | (1d 8°/80%) | 16 | 18 | 15 | n.m.2 | 22 |
| | (2d 8°/80%) | 65 | 67 | 63 | 39 | 65 |
| Königshärte [s] | (1d NK) | 52 | 51 | 45 | 36 | 36 |
| | (2d NK) | 99 | 93 | 95 | 115 | 99 |
| | (7d NK) | 153 | 151 | 155 | 164 | 148 |
| | (14d NK) | 161 | 158 | 160 | 176 | 151 |
| Königshärte [s] | (7d 8°/80%) | 31 | 38 | 22 | 28 | 18 |
| | (+2d NK) | 115 | 122 | 115 | 87 | 52 |
| | (+7d NK) | 152 | 153 | 151 | 105 | 97 |
| | (+14d NK) | 163 | 164 | 161 | 110 | 123 |
| Aspekt (NK) | | schön | schön | schön | schön | (Struktur) |
| Aspekt (8°/80%) Blushing | | schön (1) | schön (1) | schön (1) | Struktur 4 | Struktur 4 |
| Q-Sun (72h) ΔE | | 2.1 | 1.7 | 2.5 | n.b. | n.b. |

| | | | | | | |
|---|---|---|---|---|---|---|
| ² nicht messbar (zu weich); "n.b." steht für "nicht bestimmt" | | | | | | |

### Beispiele 12 bis 13:

Für jedes Beispiel wurden die in der Tabelle 3 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.
Ebenso wurden die in den Tabellen 3 angegebenen Inhaltsstoffe der Härter-Komponente verarbeitet und aufbewahrt.
Anschliessend wurden die beiden Komponenten jeder Zusammensetzung mittels des Zentrifugalmischers zu einer homogenen Flüssigkeit verarbeitet und diese unverzüglich folgendermassen geprüft:
Zur Beurteilung des **Aspekts** und der **Zwischenhaftung** wurde von jeder Beschichtung ein Prüfkörper hergestellt, indem eine Schicht von 180 µm Nassfilm auf ein Stahlblech 150x100x3mm mittels Fliessbecherpistole aufgespritzt, 24 Stunden im Normklima gelagert und anschliessend eine zweite Schicht von 180 µm Nassfilm mittels Fliessbecherpistole aufgetragen wurde. Nach einer Lagerzeit von 14 Tagen im Normklima wurde die Oberfläche der Beschichtung beurteilt (= Aspekt). Als "schön" wurde eine ebenmässige, nicht-klebrige, glänzende Oberfläche ohne Struktur, Belag oder sonstige Fehler bewertet. Als Mass für die Zwischenhaftung wurde anschliessen ein Test auf Haftzug gemäss ISO 4624 mit einer Prüfgeschwindigkeit von 1MPa/s durchgeführt, wobei ein auf die Beschichtung aufgeklebter Stempel senkrecht nach oben weggezogen wurde. Dabei wurde die Zwischenhaftung als "schlecht" bewertet, wenn der Wert des Haftzugs weniger als 5 MPa betrug und zwischen den beiden Schichten des Prüfkörpers ein adhädives Bruchbild auftrat. Andernfalls wurde die Zwischenhaftung als "gut" bewertet Als Mass für die **Wärmeschockbeständigkeit** wurde ein Stahlblech (gestrahlt SA 2½, Rautiefe 60-80 µm) 150x100x3mm beschichtet, indem zweimal 220 µm Nassfilm (= zweimal etwa 150 µm Trockenfilm, insgesamt etwa 300 µm Trockenfilm) mittels einer Fliessbecherpistole aufgespritzt wurden, wobei zwischen den Schichten eine Wartezeit von 24 Stunden eingehalten wurde. Die so hergestellten Prüfkörper wurden 7 Tage im Normklima gelagert und durchliefen anschliessend 20 Zyklen gemäss DIN EN ISO 19277 zwischen einem Umluftofen mit 204 °C und Eiswasser, wobei die Prüfkörper im Umluftofen bei 204 °C gelagert, einmal pro 24 Stunden während 1 Minute direkt aus dem Ofen in einen Eimer mit Eiswasser getaucht und anschliessend direkt wieder im Umluftofen aufbewahrt wurden (= 1 Zyklus). Übers Wochenende wurden die Prüfkörper im Umluftofen gelagert. Nach 20 Zyklen wurden die Prüfkörper auf Raumtemperatur abgekühlt und optisch mit Hilfe einer Lupe daraufhin beurteilt, ob die Beschichtung intakt oder zerstört war, und ob Risse oder Abplatzungen in der Beschichtung oder Korrosion am Stahlblech auftraten.
Als Mass für die **Korrosionsbeständigkeit** wurde ein wie für den Test auf Zwischenhaftung hergestellter Prüfkörper mit 720 h **Kondensationswasser** gemäss ISO 6270-1 belastet und anschliessend ein Test auf Haftzug gemäss ISO 4624 mit einer Prüfgeschwindigkeit von 1MPa/s durchgeführt. Zeigte der Prüfkörper keine Anzeichen von Korrosion und betrug der Wert des Haftzugs mehr als 6 MPa wurde der Test als "sehr gut" bewertet. Ein weiterer identisch hergestellter Prüfkörper wurde 1440 h mit neutralem **Salzsprühnebel** gemäss ISO 9227 belastet und anschliessend ein Test auf Haftzug gemäss ISO 4624 mit einer Prüfgeschwindigkeit von 1MPa/s durchgeführt, wobei die Bewertung wie bei der Belastung mit Kondensationswasser beschrieben bewertet wurde.

Die Resultate sind in der Tabelle 3 angegeben.

**Tabelle 3: Zusammensetzung und Eigenschaften der Beispiele 12 bis 13.**

| **Beispiel** | **12** | **13** |
|---|---|---|
| **Harz-Komponente:** | | |
| Epilox^{®} N 18-10 | 21.0 | 21.0 |
| Xylol | 10.0 | 10.0 |
| Zink-Pigment | 10.0 | 10.0 |
| Talk | 39.0 | 39.0 |
| Pigmentpaste | 10.0 | 10.0 |
| n-Butanol | 10.0 | 10.0 |

| **Härter-Komponente:** | | |
|---|---|---|
| Addukt **A1** | 11.5 | - |
| Addukt **A2** | - | 11.5 |
| Aspekt | schön | schön |
| Zwischen haftung | gut | gut |
| Wärmeschockbeständigkeit: | bestanden | bestanden |
| Korrosionsbeständigkeit: | | |
| Kondensationswasser: | sehr gut | sehr gut |
| Salzsprühnebel: | sehr gut | sehr gut |

## Patentansprüche

1. Aminfunktionelles Addukt aus der Umsetzung von
- mindestens einem Amin der Formel (I),
Z-NH-A-NH-CH₂-Y (I)
wobei
A für einen zweiwertigen Alkylen-, Cycloalkylen- oder Arylalkylen-Rest mit 2 bis 15 C-Atomen steht,
Z für H oder ---CH₂-Y steht, und
Y für H oder einen Alkyl-, Cycloalkyl, Aralkyl- oder Aryl-Rest mit 1 bis 11 C-Atomen steht,
wobei die beiden Stickstoffatome, an welche der Rest A gebunden ist, durch mindestens zwei C-Atome voneinander getrennt sind und das Amin der Formel (I) insgesamt mindestens 8 C-Atome enthält,
- mit mindestens einem Novolak-Epoxidharz mit einer mittleren Funktionalität im Bereich von 2.5 bis 4.

2. Addukt gemäss Anspruch 1, **dadurch gekennzeichnet, dass** A ausgewählt ist aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,2-Cyclohexylen, 1,3-Cyclohexylen, 1,4-Cyclohexylen, 4(2)-Methyl-1,3-cyclohexylen, 1,3-Cyclohexylen-bis(methylen) und 1,4-Cyclohexylen-bis(methylen).

3. Addukt gemäss einem der Ansprüche 1 bis 2, **dadurch gekennzeichnet, dass** Y ausgewählt ist aus der Gruppe bestehend aus H, Methyl, Ethyl, Propyl, Isopropyl, Butyl, Pentyl, Heptyl, Hept-2-yl, Phenyl, 4-Methylphenyl, 1-Naphthyl und Cyclohexyl.

4. Addukt gemäss einem der Ansprüche 1 bis 3, **dadurch gekennzeichnet, dass** Z für H steht, oder dass das Amin der Formel (I) eine Mischung enthaltend ein Amin der Formel (I) mit Z = H und ein Amin der Formel (I) mit Z = ---CH₂-Y ist.

5. Addukt gemäss einem der Ansprüche 1 bis 4, **dadurch gekennzeichnet, dass** A für 1,2-Ethylen und Y für Phenyl stehen.

6. Addukt gemäss einem der Ansprüche 1 bis 5, **dadurch gekennzeichnet, dass** das Novolak-Epoxidharz ein Phenol-Formaldehyd Novolak-Glycidylether ist.

7. Addukt gemäss einem der Ansprüche 1 bis 6, **dadurch gekennzeichnet, dass** die Umsetzung in einem stöchiometrischen Verhältnis von weniger als 3 mol, bevorzugt weniger als 2.6 mol, Amin der Formel (I) auf 1 Mol-Equivalent Epoxidgruppen erfolgt ist, insbesondere im Bereich von 1.3 bis 2.5 mol, bevorzugt 1.4 bis 2.1 mol, Amin der Formel (I) auf 1 Mol-Equivalent Epoxidgruppen.

8. Addukt gemäss einem der Ansprüche 1 bis 7, **dadurch gekennzeichnet, dass** oligomere Verbindungen der Formel (III) enthalten sind, 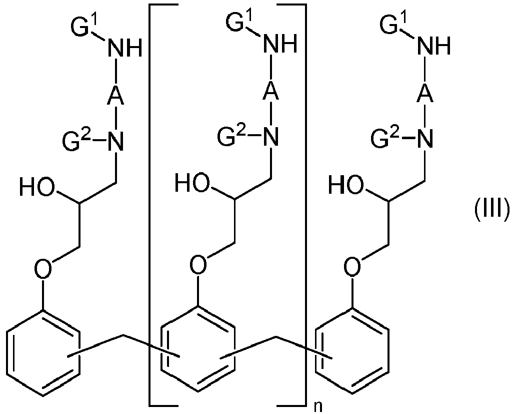 wobei
n im Mittel für einen Wert im Bereich von 0.5 bis 3, bevorzugt 0.7 bis 2.7, steht, und
G¹ und G² für Z stehen mit der Massgabe, dass mindestens eines der beiden für ---CH₂-Y steht.

9. Addukt gemäss einem der Ansprüche 1 bis 8, **dadurch gekennzeichnet, dass** es eine Viskosität bei 20 °C im Bereich von 5 bis 500 Pa·s aufweist, gemessen mittels Kegel-Platten Viskosimeter bei einer Schergeschwindigkeit von 10 s⁻¹ aufweist.

10. Härter für Epoxidharze enthaltend mindestens ein Addukt gemäss einem der Ansprüche 1 bis 9 und mindestens einen weiteren Bestandteil ausgewählt aus der Gruppe bestehend aus weiteren Aminen, Beschleunigern und Verdünnern.

11. Härter gemäss Anspruch 10, **dadurch gekennzeichnet dass** mindestens ein weiteres Amin ausgewählt aus der Gruppe bestehend aus N-Benzyl-1,2-ethandiamin, N,N'-Dibenzyl-1,2-ethandiamin, 1,5-Diamino-2-methylpentan, 2,2(4),4-Trimethyl-1,6-hexandiamin, 1,2-Diaminocyclohexan, 1,3-Bis(aminomethyl)cyclohexan, 1,4-Bis(aminomethyl)cyclohexan, Bis(4-aminocyclohexyl)methan, 1-Amino-3-aminomethyl-3,5,5-trimethylcyclohexan, 2(4)-Methyl-1,3-diaminocyclohexan, 1,3-Bis(aminomethyl)benzol, Diethylentriamin, Triethylentetramin, Tetraethylenpentamin, N-(2-Aminoethyl)-1,3-propandiamin, N,N'-Bis(3-aminopropyl)ethylendiamin, Dipropylentriamin, Bis-(hexamethylen)triamin, Polyoxypropylendiaminen mit einem mittlerem Molekulargewicht Mₙ im Bereich von 200 bis 500 g/mol und Polyoxypropylentriaminen mit einem mittlerem Molekulargewicht Mₙ im Bereich von 300 bis 500 g/mol enthalten ist.

12. Härter gemäss einen der Ansprüche 10 bis 11, **dadurch gekennzeichnet, dass** 5 bis 70 %, bevorzugt 7 bis 55 %, insbesondere 10 bis 40 %, aller vorhandenen Aminwasserstoffe vom Addukt gemäss einem der Ansprüche 1 bis 9 stammen.

13. Epoxidharz-Zusammensetzung umfassend
- eine Harz-Komponente enthaltend mindestens ein Epoxidharz und
- eine Härter-Komponente enthaltend mindestens ein Addukt gemäss einem der Ansprüche 1 bis 9 oder einen Härter gemäss einem der Ansprüche 10 bis 12.

14. Verwendung einer Epoxidharz-Zusammensetzung gemäss Anspruch 13 als Beschichtung, Primer, Klebstoff, Dichtstoff, Vergussmasse, Giessharz, Imprägnierharz oder als Matrix für Faserverbundwerkstoffe.

15. Artikel erhalten aus der Verwendung gemäss Anspruch 14.
